# EUROPEAN PATENT SPECIFICATION

(11) **EP 3 128 389 B1**
(45) Date of publication and mention of the grant of the patent: **04.12.2019**
(21) Application number: 16165750.7
(22) Date of filing: 18.04.2016
(51) Int. Cl.: G05F 1/56, G05F 1/46, G05F 1/563

(54) **DYNAMIC CURRENT SINK FOR STABILIZING LOW DROPOUT LINEAR REGULATOR (LDO)**
DYNAMISCHE STROMSENKE ZUR STABILISIERUNG EINES LINEARREGLERS MIT GERINGER ABFALLSPANNUNG (LDO)
PUITS DE COURANT DYNAMIQUE POUR LA STABILISATION DE RÉGULATEUR LINÉAIRE À FAIBLE CHUTE DE TENSION (LDO)

(30) Priority: 07.08.2015 US 201562202636 P; 15.02.2016 US 201615043687
(43) Date of publication of application: 08.02.2017
(73) Proprietor: MediaTek Inc., Hsin-Chu 300 (TW)
(72) Inventor: CHEN, Chin-Hsun, 326 Taoyuan City (TW); LIN, Hao-Yuan, 114 Taipei (TW); CHOU, Chia-Hua, 300 Hsinchu City (TW)
(74) Representative: Goddar, Heinz J.

(56) References cited:
- US-A1- 2003 175 017
- US-A1- 2007 030 054
- US-A1- 2010 201 331
- US-A1- 2010 213 913
- US-A1- 2014 117 956

## Description

### BACKGROUND OF THE INVENTION

### Field of the Invention

The disclosure generally relates to a dynamic current sink, and more specifically, to a dynamic current sink for stabilizing an output voltage of an LDO (Low Dropout Linear Regulator).

### Description of the Related Art

An LDO (Low Dropout Linear Regulator) is a DC (Direct Current) linear voltage regulator which can regulate the output voltage even when the supply voltage is very close to the output voltage. The advantages of an LDO over other DC-to-DC regulators include the absence of switching noise, smaller device size, and greater design simplicity.

However, for practical application, if an external loading element driven by an output voltage of an LDO is changed, a loading current flowing through an output node of the LDO will be changed, and it will affect the output voltage of the LDO. For example, an overshoot output voltage or an undershoot output voltage may occur at the output node of the LDO, and such an output voltage fluctuation may degrade the stability of the LDO. Accordingly, there is a need to design a novel apparatus for overcoming the drawbacks of the conventional LDO.

US 2007/030054 A1 discloses a voltage converting circuit having an output terminal for supplying an output current at an output voltage to a load. In response to a transient of the load, a current sinking circuit allows a current source to provide a sink current flowing from the output terminal of the voltage converting circuit into a ground potential. When the output voltage decreases below a threshold voltage, the current sinking circuit allows the current source to keep providing the finite and stable sink current for an extension time, causing the output voltage to decrease from the threshold voltage to a regulated value.

### BRIEF SUMMARY OF THE INVENTION

In a preferred embodiment, the invention is directed to a dynamic current sink for stabilizing an output voltage at an output node of an LDO (Low Dropout Linear Regulator). The dynamic current sink includes a first voltage comparator, a first transistor, a first current source, a first inverter, a second current source, an NAND gate, a first capacitor, a first resistor, a second transistor, and a third transistor. The first voltage comparator compares a first reference voltage with a second control signal from the LDO, so as to generate a first control signal. The first transistor has a control terminal for receiving the first control signal, a first terminal coupled to a ground voltage, and a second terminal coupled to a first node. The first current source supplies a first current to the first node. The first inverter has an input terminal coupled to the first node, and an output terminal coupled to a second node. The second current source supplies a second current to a third node. The NAND gate has a first input terminal coupled to the third node, a second input terminal coupled to the second node, and an output terminal coupled to a fourth node. The first capacitor is coupled between the fourth node and a fifth node. The first resistor is coupled between the fifth node and the ground voltage. The second transistor has a control terminal coupled to the fifth node, a first terminal coupled to the ground voltage, and a second terminal coupled to the third node. The third transistor has a control terminal coupled to the fifth node, a first terminal coupled to the ground voltage, and a second terminal coupled to the output node. The third transistor is configured to selectively draw a first discharge current from the output node.

In some embodiments, the dynamic current sink further includes a second resistor. The second resistor is coupled between the output node and the second terminal of the third transistor.

In some embodiments, the first transistor, the second transistor, and the third transistor are NMOS transistors (N-type Metal Oxide Semiconductor Field Effect Transistors).

In some embodiments, the LDO includes a second voltage comparator, a fourth transistor, a third resistor, and a fourth resistor. The second voltage comparator compares a second reference voltage with a feedback voltage, so as to generate the second control signal. The fourth transistor has a control terminal for receiving the second control signal, a first terminal coupled to a supply voltage, and a second terminal coupled to the output node. The third resistor is coupled between the output node and a sixth node. The sixth node has the feedback voltage. The fourth resistor is coupled between the sixth node and the ground voltage.

In some embodiments, the fourth transistor is configured to selectively supply a loading current to the output node.

In some embodiments, the output node is further coupled to a stabilizing capacitor and is arranged for driving an external loading element.

In some embodiments, if the loading current is changed, an overshoot output voltage or an undershoot output voltage occurs at the output node, and the first discharge current is arranged for stabilizing the output voltage at the output node.

In some embodiments, the first voltage comparator has a positive input terminal for receiving the first reference voltage, a negative input terminal for receiving the second control signal, and an output terminal for outputting the first control signal. The second voltage comparator has a positive input terminal for receiving the feedback voltage, a negative input terminal for receiving the second reference voltage, and an output terminal for outputting the second control signal. The fourth transistor is a PMOS transistor (P-type Metal Oxide Semiconductor Field Effect Transistor).

In some embodiments, the first voltage comparator has a positive input terminal for receiving the second control signal, a negative input terminal for receiving the first reference voltage, and an output terminal for outputting the first control signal. The second voltage comparator has a positive input terminal for receiving the second reference voltage, a negative input terminal for receiving the feedback voltage, and an output terminal for outputting the second control signal. The fourth transistor is an NMOS transistor (N-type Metal Oxide Semiconductor Field Effect Transistor).

In some embodiments, the dynamic current sink further includes a second inverter, a third current source, a fifth transistor, a second capacitor, a sixth transistor, a fifth resistor, and a seventh transistor. The second inverter has an input terminal coupled to the fourth node, and an output terminal coupled to a seventh node. The third current source supplies a third current to an eighth node. The fifth transistor has a control terminal coupled to the fourth node, a first terminal coupled to a ninth node, and a second terminal coupled to the eighth node. The second capacitor is coupled between the ninth node and the ground voltage. The sixth transistor has a control terminal coupled to the seventh node, a first terminal coupled to a tenth node, and a second terminal coupled to the ninth node. The fifth resistor is coupled between the tenth node and the ground voltage. The seventh transistor has a control terminal coupled to the ninth node, a first terminal coupled to the ground voltage, and a second terminal coupled to the output node. The seventh transistor is configured to selectively draw a second discharge current from the output node.

In some embodiments, the dynamic current sink further includes a sixth resistor. The sixth resistor is coupled between the output node and the second terminal of the seventh transistor.

In some embodiments, the fifth transistor, the sixth transistor, and the seventh transistor are NMOS transistors (N-type Metal Oxide Semiconductor Field Effect Transistors).

In some embodiments, the first discharge current and the second discharge current have different slopes over time axis.

In another preferred embodiment, the invention is directed to a dynamic current sink for stabilizing an output voltage at an output node of an LDO (Low Dropout Linear Regulator). The dynamic current sink includes a current comparator, a first transistor, a first current sink, a first capacitor, and a second transistor. The current comparator compares a partial loading current from the LDO with a reference current, so as to generate a first control signal. The first transistor has a control terminal for receiving the first control signal, a first terminal coupled to a supply voltage, and a second terminal coupled to a first node. The first current sink draws a first current from the first node. The first capacitor is coupled between the first node and a ground voltage. The second transistor has a control terminal coupled to the first node, a first terminal coupled to the ground voltage, and a second terminal coupled to the output node. The second transistor is configured to selectively draw a first discharge current from the output node.

In some embodiments, the dynamic current sink further includes a first resistor. The first resistor is coupled between the output node and the second terminal of the second transistor.

In some embodiments, the first transistor is a PMOS transistor (P-type Metal Oxide Semiconductor Field Effect Transistor), and the second transistor is an NMOS transistor (N-type Metal Oxide Semiconductor Field Effect Transistor).

In some embodiments, the LDO includes a voltage comparator, a third transistor, a second resistor, and a third resistor. The voltage comparator compares a reference voltage and a feedback voltage, so as to generate a second control signal. The third transistor has a control terminal for receiving the second control signal, a first terminal coupled to the supply voltage, and a second terminal coupled to the output node. The second resistor is coupled between the output node and a second node. The second node has the feedback voltage. The third resistor is coupled between the second node and the ground voltage.

In some embodiments, the third transistor is configured to selectively supply a loading current to the output node.

In some embodiments, the partial loading current is extracted from a portion of the loading current.

In some embodiments, the output node is further coupled to a stabilizing capacitor and is arranged for driving an external loading element.

In some embodiments, if the loading current is changed, an overshoot output voltage or an undershoot output voltage occurs at the output node, and the first discharge current is arranged for stabilizing the output voltage at the output node.

In some embodiments, the current comparator is coupled between the second terminal of the third transistor and the ground voltage. The voltage comparator has a positive input terminal for receiving the feedback voltage, a negative input terminal for receiving the reference voltage, and an output terminal for outputting the second control signal. The third transistor is a PMOS transistor (P-type Metal Oxide Semiconductor Field Effect Transistors).

In some embodiments, the current comparator is coupled between the supply voltage and the first terminal of the third transistor. The voltage comparator has a positive input terminal for receiving the reference voltage, a negative input terminal for receiving the feedback voltage, and an output terminal for outputting the second control signal. The third transistor is an NMOS transistor (N-type Metal Oxide Semiconductor Field Effect Transistors).

In some embodiments, the dynamic current sink further includes an inverter, a fourth transistor, a second current sink, a second capacitor, and a fifth transistor. The inverter has an input terminal coupled to the first node, and an output terminal coupled to a third node. The fourth transistor has a control terminal coupled to the third node, a first terminal coupled to the supply voltage, and a second terminal coupled to a fourth node. The second current sink draws a second current from the fourth node. The second capacitor is coupled between the fourth node and the ground voltage. The fifth transistor has a control terminal coupled to the fourth node, a first terminal coupled to the ground voltage, and a second terminal coupled to the output node. The fifth transistor is configured to selectively draw a second discharge current from the output node.

In some embodiments, the dynamic current sink further includes a fourth resistor. The fourth resistor is coupled between the output node and the second terminal of the fifth transistor.

In some embodiments, the fourth transistor is a PMOS transistor (P-type Metal Oxide Semiconductor Field Effect Transistor), and the fifth transistor is an NMOS transistor (N-type Metal Oxide Semiconductor Field Effect Transistor).

In some embodiments, the first discharge current and the second discharge current have different slopes over time axis.

### BRIEF DESCRIPTION OF DRAWINGS

The invention can be more fully understood by reading the subsequent detailed description and examples with references made to the accompanying drawings, wherein:
FIG. 1A is a diagram of a dynamic current sink according to an embodiment of the invention;
FIG. 1B is a diagram of an LDO (Low Dropout Linear Regulator) according to an embodiment of the invention;
FIG. 1C is a diagram of signal waveforms of a conventional LDO without the proposed dynamic current sink;
FIG. 1D is a diagram of signal waveforms of an LDO with the proposed dynamic current sink according to an embodiment of the invention;
FIG. 2A is a diagram of a dynamic current sink according to an embodiment of the invention;
FIG. 2B is a diagram of an LDO according to an embodiment of the invention;
FIG. 3A is a diagram of a dynamic current sink according to an embodiment of the invention;
FIG. 3B is a diagram of a dynamic current sink according to an embodiment of the invention;
FIG. 3C is a diagram of signal waveforms of an LDO with the proposed dynamic current sink according to an embodiment of the invention;
FIG. 4A is a diagram of a dynamic current sink according to an embodiment of the invention;
FIG. 4B is a diagram of an LDO according to an embodiment of the invention;
FIG. 4C is a diagram of an LDO according to an embodiment of the invention;
FIG. 5A is a diagram of a dynamic current sink according to an embodiment of the invention;
FIG. 5B is a diagram of signal waveforms of a conventional LDO without the proposed dynamic current sink; and
FIG. 5C is a diagram of signal waveforms of an LDO with the proposed dynamic current sink according to an embodiment of the invention.

### DETAILED DESCRIPTION OF THE INVENTION

In order to illustrate the purposes, features and advantages of the invention, the embodiments and figures of the invention are disclosed in detail as follows.

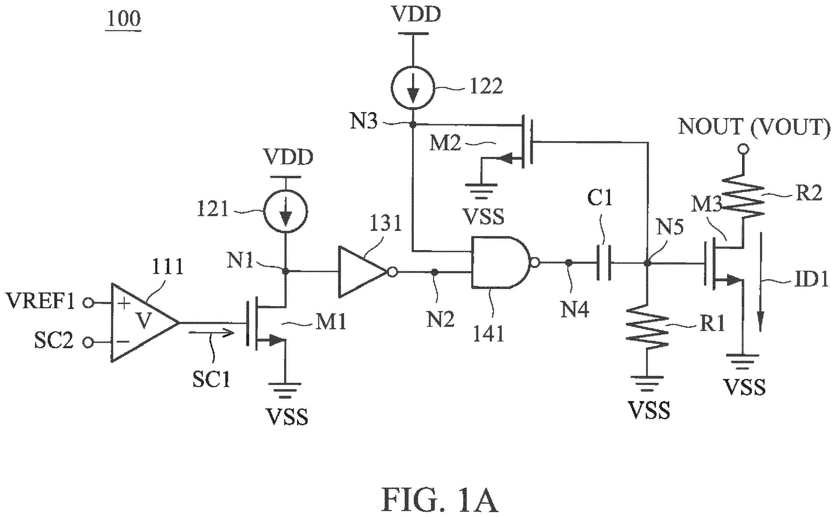

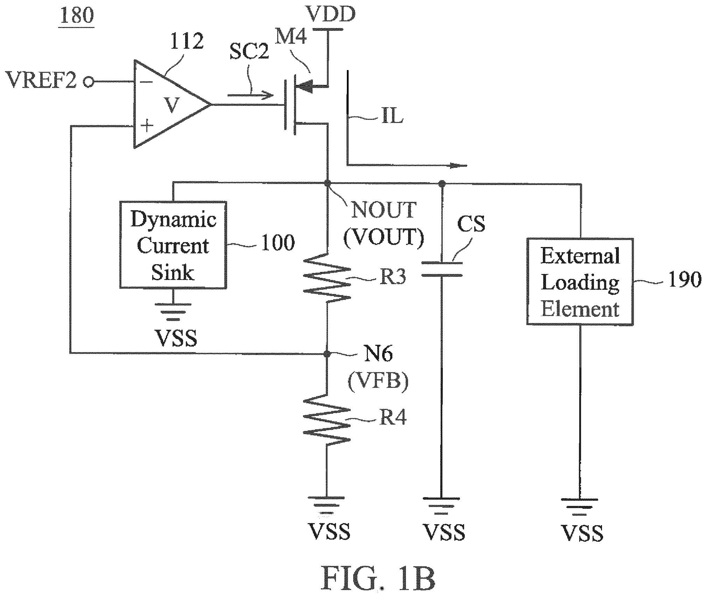

FIG. 1A is a diagram of a dynamic current sink 100 according to an embodiment of the invention. FIG. 1B is a diagram of an LDO (Low Dropout Linear Regulator) 180 according to an embodiment of the invention. Please refer to FIG. 1A and FIG. 1B together. The dynamic current sink 100 is configured to stabilize an output voltage VOUT at an output node NOUT of the LDO 180. As shown in FIG. 1A, the dynamic current sink 100 includes a first voltage comparator 111, a first transistor M1, a first current source 121, a first inverter 131, a second current source 122, an NAND gate 141, a first capacitor C1, a first resistor R1, a second transistor M2, and a third transistor M3. The first transistor M1, the second transistor M2, and the third transistor M3 may be NMOS transistors (N-type Metal Oxide Semiconductor Field Effect Transistors). The first voltage comparator 111 compares a first reference voltage VREF1 with a second control signal SC2 from the LDO 180, so as to generate a first control signal SC1. Specifically, the first voltage comparator 111 has a positive input terminal for receiving the first reference voltage VREF1, a negative input terminal for receiving the second control signal SC2, and an output terminal for outputting the first control signal SC1. If the voltage at the positive input terminal is higher than the voltage at the negative input terminal, the first voltage comparator 111 will output a high logic level at the output terminal. The first transistor M1 has a control terminal for receiving the first control signal SC1, a first terminal coupled to a ground voltage VSS, and a second terminal coupled to a first node N1. The first current source 121 supplies a first current to the first node N1. The first inverter 131 has an input terminal coupled to the first node N1, and an output terminal coupled to a second node N2. The second current source 122 supplies a second current to a third node N3. The NAND gate 141 has a first input terminal coupled to the third node N3, a second input terminal coupled to the second node N2, and an output terminal coupled to a fourth node N4. The first capacitor C1 is coupled between the fourth node N4 and a fifth node N5. The first resistor R1 is coupled between the fifth node N5 and the ground voltage VSS. The second transistor M2 has a control terminal coupled to the fifth node N5, a first terminal coupled to the ground voltage VSS, and a second terminal coupled to the third node N3. The third transistor M3 has a control terminal coupled to the fifth node N5, a first terminal coupled to the ground voltage VSS, and a second terminal coupled to the output node NOUT of the LDO 180. The third transistor M3 is configured to selectively draw a first discharge current ID1 from the output node NOUT. In some embodiments, the dynamic current sink 100 further includes a second resistor R2 coupled between the output node NOUT and the second terminal of the third transistor M3, so as to limit the magnitude of the first discharge current ID1.

As shown in FIG. 1B, the LDO 180 includes a second voltage comparator 112, a fourth transistor M4, a third resistor R3, and a fourth resistor R4. The fourth transistor M4 is a PMOS transistor (P-type Metal Oxide Semiconductor Field Effect Transistor). The second voltage comparator 112 compares a second reference voltage VREF2 with a feedback voltage VFB, so as to generate the second control signal SC2. Specifically, the second voltage comparator 112 has a positive input terminal for receiving the feedback voltage VFB, a negative input terminal for receiving the second reference voltage VREF2, and an output terminal for outputting the second control signal SC2. If the voltage at the positive input terminal is higher than the voltage at the negative input terminal, the second voltage comparator 112 will output a high logic level at the output terminal. The fourth transistor M4 has a control terminal for receiving the second control signal SC2, a first terminal coupled to a supply voltage VDD, and a second terminal coupled to the output node NOUT. The third resistor R3 is coupled between the output node NOUT and a sixth node N6. The sixth node N6 has the feedback voltage VFB. The fourth resistor R4 is coupled between the sixth node N6 and the ground voltage VSS. The fourth transistor M4 is configured to selectively supply a loading current IL to the output node NOUT. The output node NOUT of the LDO 180 may be further coupled to a stabilizing capacitor CS and arranged for driving an external loading element 190. If the loading current IL is changed (e.g., the external loading element 190 is placed by another one which consumes different loading current), an overshoot output voltage or an undershoot output voltage may occur at the output node NOUT. The first discharge current ID1 of the dynamic current sink 100 is arranged for stabilizing the output voltage VOUT at the output node NOUT of the LDO 180.

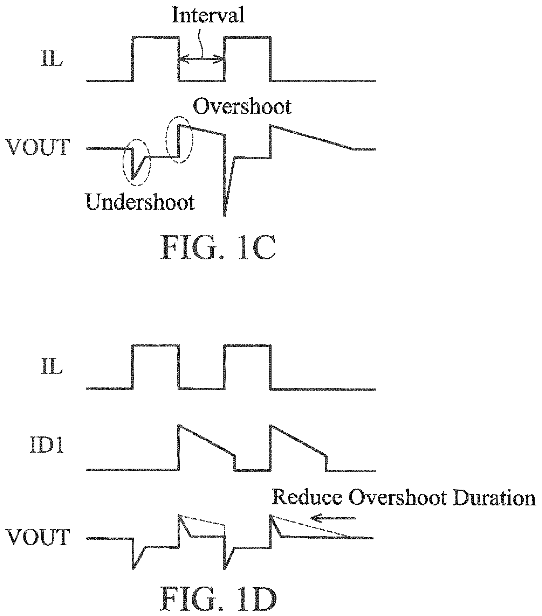

FIG. 1C is a diagram of signal waveforms of a conventional LDO without the proposed dynamic current sink 100. As shown in FIG. 1C, the output node of a conventional LDO may have an overshoot/undershoot output voltage at each transition edge of the loading current. The transition edge of the loading current may result from a change of the external loading element 190. For example, if the external loading element 190 is replaced with another device which consumes more or less current, a transition edge of the loading current will be formed, and an overshoot/undershoot output voltage will occur at the output node of the LDO. For a conventional LDO, the overshoot/undershoot output voltage has a relatively large amplitude and a relatively long duration, and it leads to more output fluctuations, thereby negatively affecting the output stability of the LDO.

FIG. ID is a diagram of signal waveforms of the LDO 180 with the proposed dynamic current sink 100 according to an embodiment of the invention. The first discharge current ID1 of the dynamic current sink 1 00 can be arranged for pulling down the overshoot output voltage at the output node NOUT of the LDO 180. Please refer to FIGS. 1A-1D together to understand the operation theory. If the output voltage VOUT at the output node NOUT of the LDO 180 becomes too high (i.e., an overshoot output voltage occurs), the feedback voltage VFB may rise and trigger a low-to-high state transition of the second control signal SC2. The state transition of the second control signal SC2 results in the following chain reactions. The fourth transistor M4 is disabled, and it stops pulling up the output voltage VOUT. The first control signal SC1 has a high-to-low state transition. The first transistor M1 is disabled. The voltage at the first node N1 is pulled up to a high logic level by the first current source 121. The voltage at the second node N2 is pulled down to a low logic level by the first inverter 131. The voltage at the fourth node N4 and the voltage at the fifth node N5 are pulled up to a high logic level by the NAND gate 141. The second transistor M2 helps to stabilize the voltage at the fifth node N5. The third transistor M3 is enabled to draw the first discharge current ID1 from the output node NOUT, thereby pulling down the output voltage VOUT and eliminating the overshoot output voltage at the output node NOUT. Then, the first discharge current ID1 gradually decreases to zero because of the voltage RC decay at the fifth node N5 (i.e., the transistor control terminal). In comparison to the waveforms of FIG. 1C, the duration and magnitude of the overshoot/undershoot output voltage of the LDO 180 of FIG. 1D are both significantly reduced by the dynamic current sink 100 (if the overshoot output voltage is reduced, the undershoot output voltage will also be reduced). Accordingly, the proposed dynamic current sink 100 can effectively stabilize the output voltage VOUT at the output node NOUT of the LDO 180.

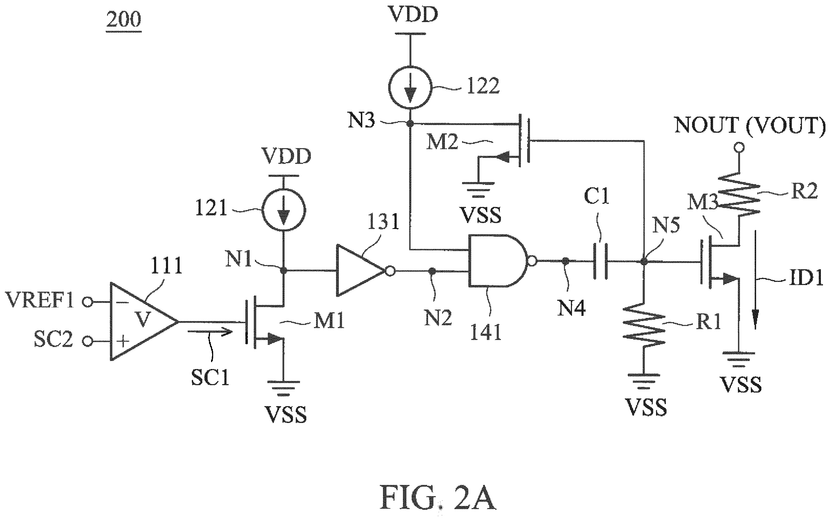

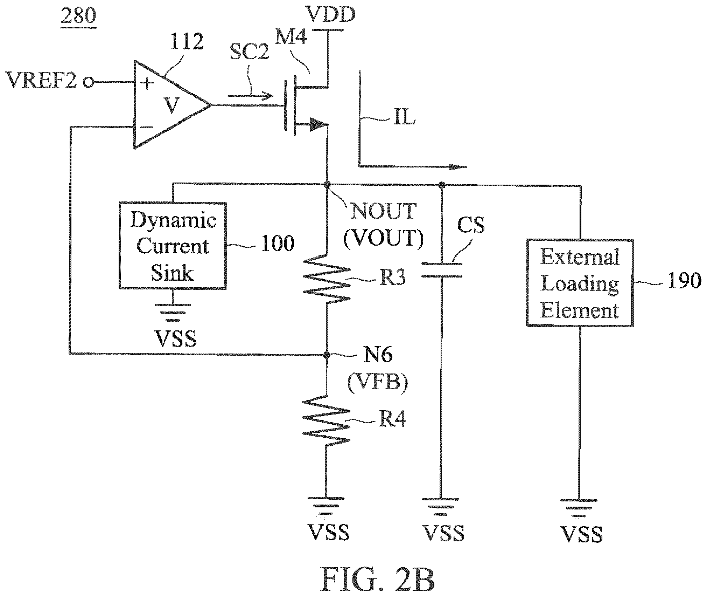

FIG. 2A is a diagram of a dynamic current sink 200 according to an embodiment of the invention. FIG. 2B is a diagram of an LDO 280 according to an embodiment of the invention. The dynamic current sink 200 is configured to stabilize an output voltage VOUT at an output node NOUT of the LDO 280. FIG. 2A and FIG. 2B are similar to FIG. 1A and FIG. 1B. In the embodiment of FIG. 2A and FIG. 2B, the first voltage comparator 111 has a positive input terminal for receiving the second control signal SC2, a negative input terminal for receiving the first reference voltage VREF1, and an output terminal for outputting the first control signal SC1. The second voltage comparator 112 has a positive input terminal for receiving the second reference voltage VREF2, a negative input terminal for receiving the feedback voltage VFB, and an output terminal for outputting the second control signal SC2. The fourth transistor M4 is an NMOS transistor. FIG. 2A and FIG. 2B show an alternative configuration of the invention, and they have similar theory of operation as mentioned in the embodiment of FIG. ID. Other features of the dynamic current sink 200 and the LDO 280 of FIG. 2A and FIG. 2B are similar to those of the dynamic current sink 100 and the LDO 180 of FIG. 1A and FIG. 1B. Therefore, these embodiments can achieve similar levels of performance.

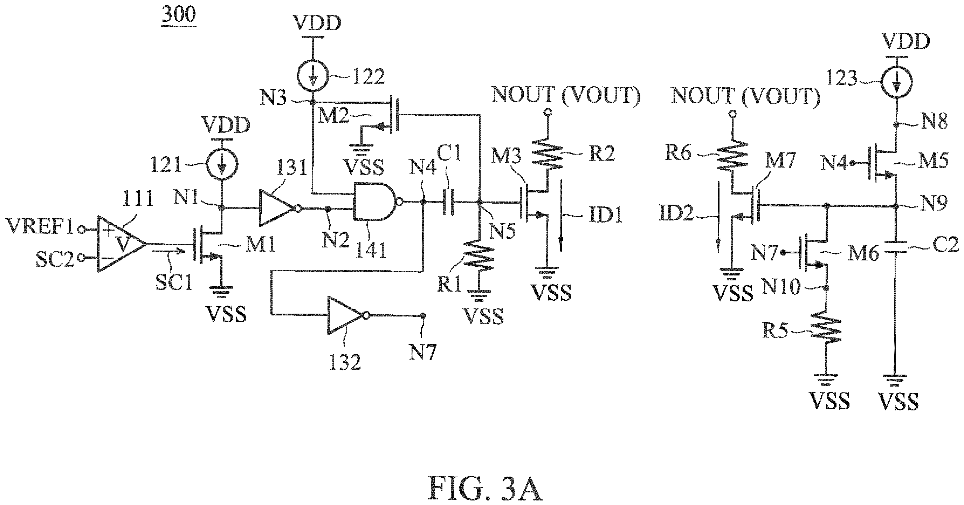

FIG. 3A is a diagram of a dynamic current sink 300 according to an embodiment of the invention. FIG. 3A is similar to FIG. 1A. In the embodiment of FIG. 3A, the first voltage comparator 111 has a positive input terminal for receiving the first reference voltage VREF1, a negative input terminal for receiving the second control signal SC2, and an output terminal for outputting the first control signal SC1. The dynamic current sink 300 is used for improving the LDO 180 of FIG. 1B. In comparison to FIG. 1A, the dynamic current sink 300 further includes a second inverter 132, a third current source 123, a fifth transistor M5, a second capacitor C2, a sixth transistor M6, a fifth resistor R5, and a seventh transistor M7. The fifth transistor M5, the sixth transistor M6, and the seventh transistor M7 may be NMOS transistors. The second inverter 132 has an input terminal coupled to the fourth node N4, and an output terminal coupled to a seventh node N7. The third current source 123 supplies a third current to an eighth node N8. The fifth transistor M5 has a control terminal coupled to the fourth node N4, a first terminal coupled to a ninth node N9, and a second terminal coupled to the eighth node N8. The second capacitor C2 is coupled between the ninth node N9 and the ground voltage VSS. The sixth transistor M6 has a control terminal coupled to the seventh node N7, a first terminal coupled to a tenth node N10, and a second terminal coupled to the ninth node N9. The fifth resistor R5 is coupled between the tenth node N10 and the ground voltage VSS. The seventh transistor M7 has a control terminal coupled to the ninth node N9, a first terminal coupled to the ground voltage VSS, and a second terminal coupled to the output node NOUT of the LDO 180. The seventh transistor M7 is configured to selectively draw a second discharge current ID2 from the output node NOUT. In some embodiments, the dynamic current sink 300 further includes a sixth resistor R6 coupled between the output node NOUT and the second terminal of the seventh transistor M7, so as to limit the magnitude of the second discharge current ID2.

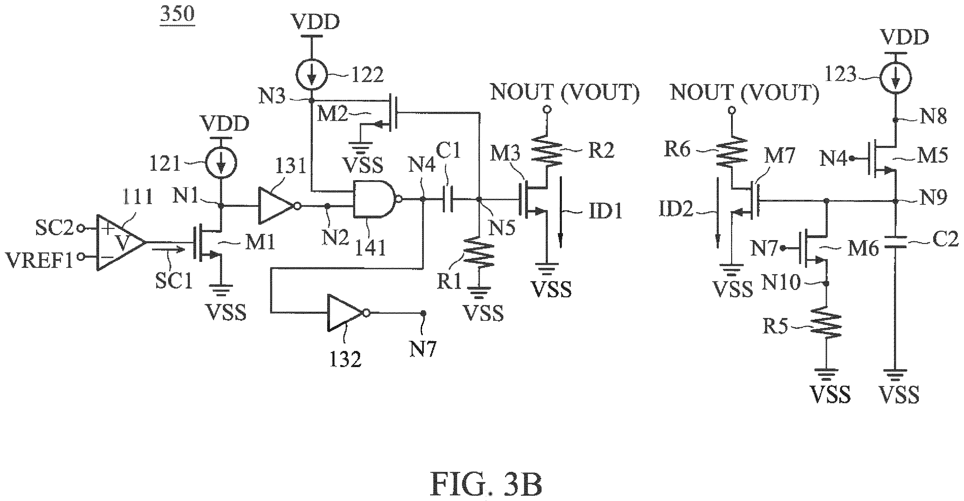

FIG. 3B is a diagram of a dynamic current sink 350 according to an embodiment of the invention. FIG. 3B is similar to FIG. 3A. In the embodiment of FIG. 3B, the first voltage comparator 111 has a positive input terminal for receiving the second control signal SC2, a negative input terminal for receiving the first reference voltage VREF1, and an output terminal for outputting the first control signal SC1. FIG. 3B shows an alternative configuration of the invention. The dynamic current sink 350 is used for improving the LDO 280 of FIG. 2B.

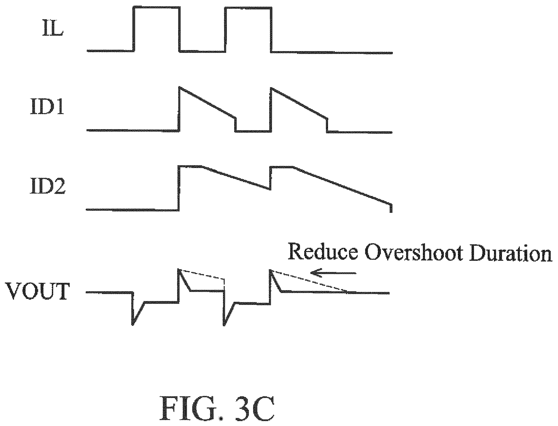

FIG. 3C is a diagram of signal waveforms of the LDO 180 with the proposed dynamic current sink 300 according to an embodiment of the invention. The first discharge current ID1 and the second charging current ID2 of the dynamic current sink 300 can both be arranged for pulling down the overshoot output voltage at the output node NOUT of the LDO 180. The first discharge current ID1 and the second discharge current ID2 may have different slopes over time axis. For example, the resistance of the first resistor R1 may be different from that of the fifth resistor R5, and the capacitance of the first capacitor C1 may be different from that of the second capacitor C2, such that the waveform of the first discharge current ID1 is different from that of the second discharge current ID2 due to different RC constants at their transistor control terminals. The second discharge current ID2 is considered as an auxiliary current for eliminating the overshoot output voltage of the LDO 180. It should be understood that the signal waveforms of the LDO 280 with the proposed dynamic current sink 350 are the same as those of FIG. 3C, and they have similar operation theory.

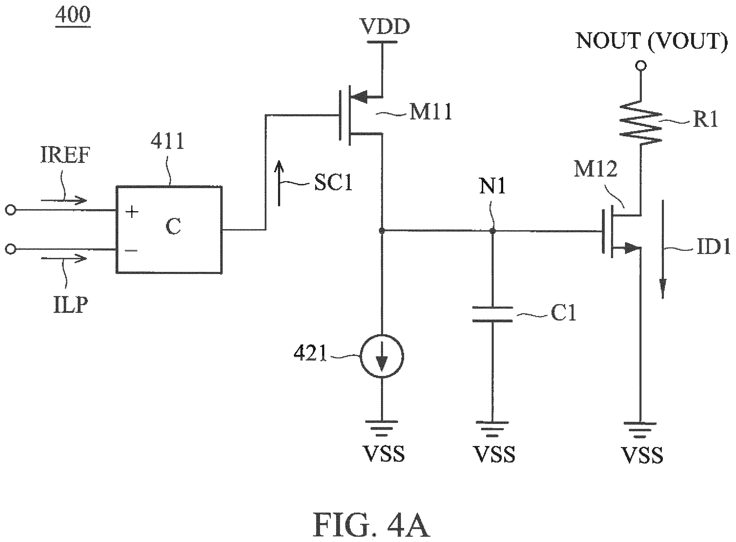

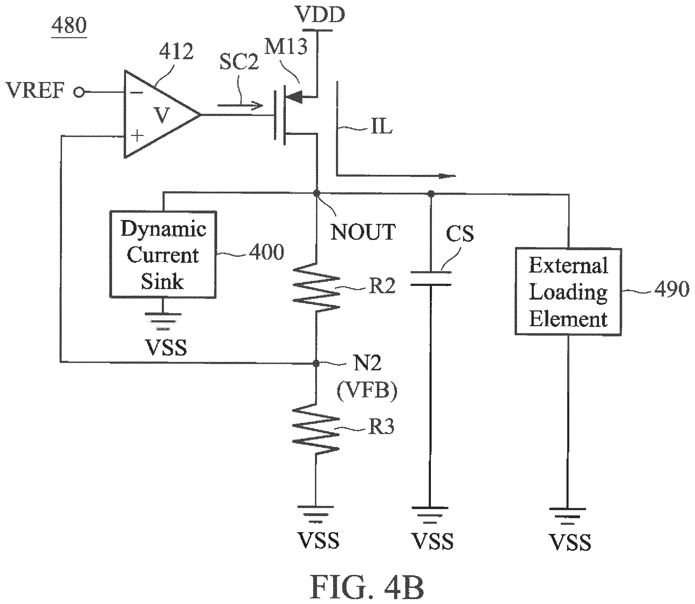

FIG. 4A is a diagram of a dynamic current sink 400 according to an embodiment of the invention. FIG. 4B is a diagram of an LDO (Low Dropout Linear Regulator) 480 according to an embodiment of the invention. Please refer to FIG. 4A and FIG. 4B together. The dynamic current sink 400 is configured to stabilize an output voltage VOUT at an output node NOUT of the LDO 480. As shown in FIG. 4A, the dynamic current sink 400 includes a current comparator 411, a first transistor M11, a first current sink 421, a first capacitor C1, and a second transistor M12. The first transistor M11 may be a PMOS transistor (P-type Metal Oxide Semiconductor Field Effect Transistor), and the second transistor M12 may be an NMOS transistor (N-type Metal Oxide Semiconductor Field Effect Transistor). The current comparator 411 compares a partial loading current ILP from the LDO 480 with a reference current IREF, so as to generate a first control signal SC1. Specifically, the current comparator 411 has a positive input terminal for receiving the reference current IREF, a negative input terminal for receiving the partial loading current ILP, and an output terminal for outputting the first control signal SC1. If the current to the positive input terminal is higher than the current to the negative input terminal, the current comparator 411 will output a high logic level at the output terminal. The first transistor M11 has a control terminal for receiving the first control signal SC1, a first terminal coupled to a supply voltage VDD, and a second terminal coupled to a first node N1. The first current sink 421 draws a first current from the first node N1. The first capacitor C1 is coupled between the first node N1 and a ground voltage VSS. The second transistor M12 has a control terminal coupled to the first node N1, a first terminal coupled to the ground voltage VSS, and a second terminal coupled to the output node NOUT of the LDO 480. The second transistor M12 is configured to selectively draw a first discharge current ID1 from the output node NOUT. In some embodiments, the dynamic current sink 400 further includes a first resistor R1 coupled between the output node NOUT and the second terminal of the second transistor M12, so as to limit the magnitude of the first discharge current ID1.

As shown in FIG. 4B, the LDO 480 includes a voltage comparator 412, a third transistor M13, a second resistor R2, and a third resistor R3. The third transistor M13 may be a PMOS transistor. The voltage comparator 412 compares a reference voltage VREF and a feedback voltage VFB, so as to generate a second control signal SC2. Specifically, the voltage comparator 412 has a positive input terminal for receiving the feedback voltage VFB, a negative input terminal for receiving the reference voltage VREF, and an output terminal for outputting the second control signal SC2. If the voltage at the positive input terminal is higher than the voltage at the negative input terminal, the voltage comparator 412 will output a high logic level at the output terminal. The third transistor M13 has a control terminal for receiving the second control signal SC2, a first terminal coupled to the supply voltage VDD, and a second terminal coupled to the output node NOUT. The second resistor R2 is coupled between the output node NOUT and a second node N2. The second node N2 has the feedback voltage VFB. The third resistor R3 is coupled between the second node N2 and the ground voltage VSS. The third transistor M13 is configured to selectively supply a loading current IL to the output node NOUT. In the embodiment of FIG. 4A and FIG. 4B, the current comparator 411 is coupled between the second terminal (drain) of the third transistor M13 of the LDO 480 and the ground voltage VSS, so as to extract the partial loading current ILP from the LDO 480. The partial loading current ILP is extracted from a portion of the loading current IL. For example, the partial loading current ILP may be 1% or 2% of the loading current IL. The output node NOUT of the LDO 480 may be further coupled to a stabilizing capacitor CS and arranged for driving an external loading element 490. If the loading current IL is changed (e.g., the external loading element 490 is placed by another one which consumes different loading current), an overshoot output voltage or an undershoot output voltage may occur at the output node NOUT. The first discharge current ID1 of the dynamic current sink 400 is arranged for stabilizing the output voltage VOUT at the output node NOUT of the LDO 480.

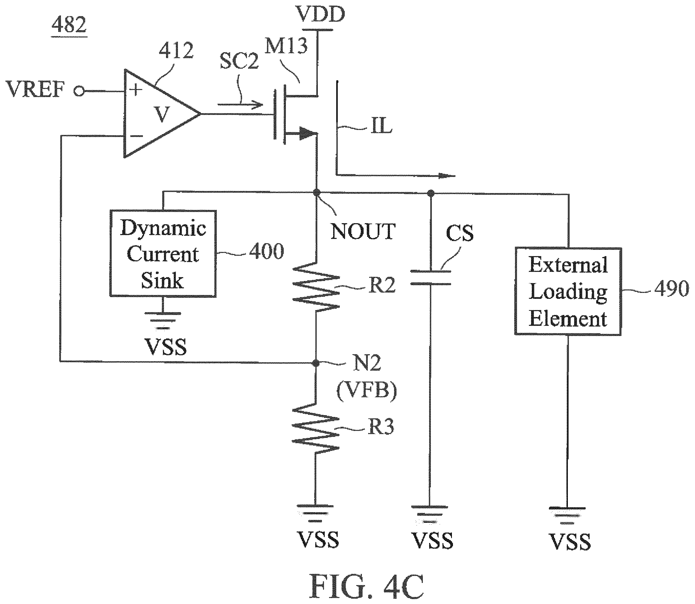

FIG. 4C is a diagram of an LDO 482 according to an embodiment of the invention. FIG. 4C is similar to FIG. 4B. In the embodiment of FIG. 4C, the voltage comparator 412 has a positive input terminal for receiving the reference voltage VREF, a negative input terminal for receiving the feedback voltage VFB, and an output terminal for outputting the second control signal SC2. The third transistor M13 is an NMOS transistor. FIG. 4C shows an alternative configuration of the invention. In alternative embodiments, the dynamic current sink 400 of FIG. 4A is configured to stabilize an output voltage VOUT at an output node NOUT of the LDO 482. In the embodiment of FIG. 4A and FIG. 4C, the current comparator 411 is coupled between the supply voltage VDD and the first terminal (drain) of the third transistor M13 of the LDO 482, so as to extract the partial loading current ILP from the LDO 482.

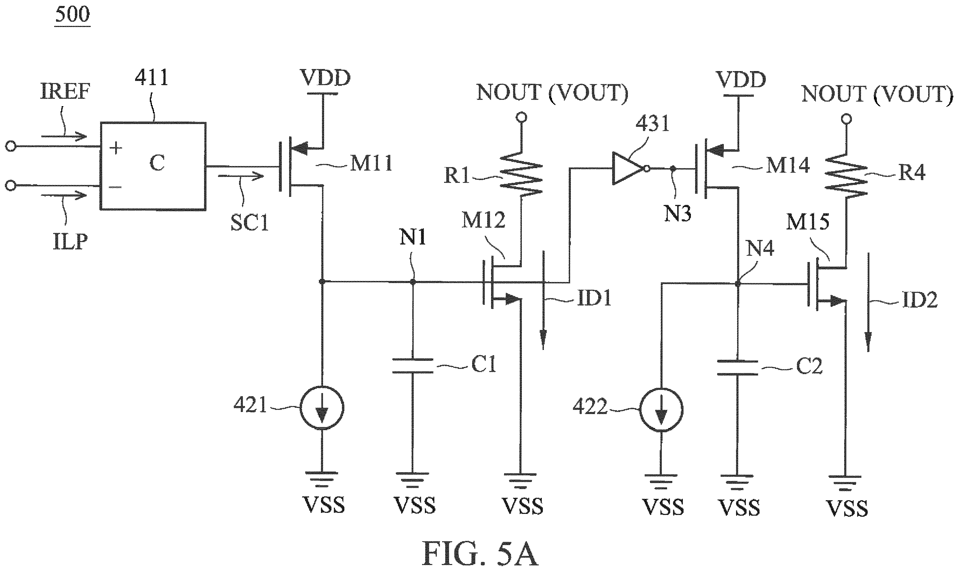

FIG. 5A is a diagram of a dynamic current sink 500 according to an embodiment of the invention. FIG. 5A is similar to FIG. 4A. The dynamic current sink 500 is configured to stabilize the output voltage VOUT at the output node NOUT of the LDO 480 (or 482). When the dynamic current sink 500 is used for the LDO 480, the current comparator 411 is coupled between the second terminal (drain) of the third transistor M13 of the LDO 480 and the ground voltage VSS, so as to extract the partial loading current ILP from the LDO 480. When the dynamic current sink 500 is used for the LDO 482, the current comparator 411 is coupled between the supply voltage VDD and the first terminal (drain) of the third transistor N113 of the LDO 482, so as to extract the partial loading current ILP from the LDO 482. In the embodiment of FIG. 5A, the dynamic current sink 500 further includes an inverter 431, a fourth transistor M14, a second current sink 422, a second capacitor C2, and a fifth transistor M15. The fourth transistor M14 may be a PMOS transistor, and the fifth transistor M15 may be an NMOS transistor. The inverter 431 has an input terminal coupled to the first node N1, and an output terminal coupled to a third node N3. The fourth transistor M14 has a control terminal coupled to the third node N3, a first terminal coupled to the supply voltage VDD, and a second terminal coupled to a fourth node N4. The second current sink 422 draws a second current from the fourth node N4. The second capacitor C2 is coupled between the fourth node N4 and the ground voltage VSS. The fifth transistor M15 has a control terminal coupled to the fourth node N4, a first terminal coupled to the ground voltage VSS, and a second terminal coupled to the output node NOUT of the LDO 480 (or 482). The fifth transistor M15 is configured to selectively draw a second discharge current ID2 from the output node NOUT. In some embodiments, the dynamic current sink 500 further includes a fourth resistor R4 coupled between the output node NOUT and the second terminal of the fifth transistor M15, so as to limit the magnitude of the second discharge current ID2.

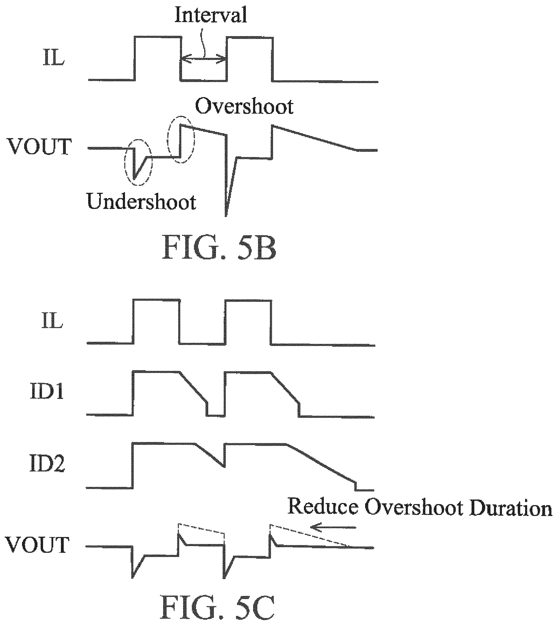

FIG. 5B is a diagram of signal waveforms of a conventional LDO without the proposed dynamic current sink 500. As shown in FIG. 5B, the output node of a conventional LDO may have an overshoot/undershoot output voltage at each transition edge of the loading current. The transition edge of the loading current may result from a change of the external loading element 490. For example, if the external loading element 490 is replaced with another device which consumes more or less current, a transition edge of the loading current will be formed, and an overshoot/undershoot output voltage will occur at the output node of the LDO. For a conventional LDO, the overshoot/undershoot output voltage has a relatively large amplitude and a relatively long duration, and it leads to more output fluctuations, thereby negatively affecting the output stability of the LDO.

FIG. 5C is a diagram of signal waveforms of the LDO 480 with the proposed dynamic current sink 500 according to an embodiment of the invention. The first discharge current ID1 and the second discharge current ID2 of the dynamic current sink 500 can be arranged for pulling down the overshoot output voltage at the output node NOUT of the LDO 480. Please refer to FIGS. 4A, 4B and 5A-5C together to understand the operational theory. Before an overshoot output voltage occurs at the output node NOUT of the LDO 480, the dynamic current sink 500 keeps drawing the first discharge current ID1 and the second discharge current ID2 from the output node NOUT. If the output voltage VOUT at the output node NOUT becomes too high (i.e., an overshoot output voltage occurs), the feedback voltage VFB may rise and trigger a low-to-high state transition of the second control signal SC2. The third transistor M13 is disabled, and it stops pulling up the output voltage VOUT. The state transition of the second control signal SC2 results in the following chain reactions. The partial loading current IPL becomes smaller than the reference current IREF. The first control signal SC1 has a low-to-high state transition. The first transistor M11 is disabled. The voltage at the first node N1 is gradually pulled down to a low logic level by the first current sink 421. The second transistor M12 is gradually turned off. The first discharge current ID1 gradually decreases to zero. Then, the voltage at the third node N3 is pulled up to a high logic level by the inverter 431. The fourth transistor M14 is disabled. The voltage at the fourth node N4 is gradually pulled down to a low logic level by the second current sink 422. The fifth transistor M15 is gradually turned off. The second discharge current ID2 gradually decreases to zero. FIG. 5A shows an alternative configuration of the invention. The overshoot output voltage of the LDO 480 is eliminated previously by the first discharge current ID1 and the second discharge current ID2 of the dynamic current sink 500. When the overshoot output voltage actually occurs, the dynamic current sink 500 gradually stops drawing the first discharge current ID1 and the second discharge current ID2 from the output node NOUT of the LDO 480. In comparison to the signal waveforms of FIG. 5B, the duration and magnitude of the overshoot/undershoot output voltage of the LDO 480 of FIG. 5C are both significantly reduced by the dynamic current sink 500 (if the overshoot output voltage is reduced, the undershoot output voltage will also be reduced). Accordingly, the proposed dynamic current sink 500 can effectively stabilize the output voltage VOUT at the output node NOUT of the LDO 480. It should be understood that the signal waveforms of the LDO 482 with the proposed dynamic current sink 500 are the same as that of FIG. 5C, and they have a similar theory of operation. The first discharge current ID1 and the second discharge current ID2 may have different slopes over time axis. For example, the capacitance of the first capacitor C1 may be different from that of the second capacitor C2, such that the waveform of the first discharge current ID1 is different from that of the second discharge current ID2 due to different RC constants at their transistor control terminals. The second discharge current ID2 is considered as an auxiliary current for eliminating the overshoot output voltage of the LDO 480 (or 482). In alternative embodiments, only one of the first discharge current ID1 and the second discharge current ID2 is used, and the invention can still work in a similar way.

The invention proposes a novel dynamic current sink to stabilize an output voltage at an output node of an LDO. By forming a negative feedback detection mechanism and drawing at least one discharge current from the output node of the LDO, the overshoot/undershoot output voltage at the output node of the LDO can be suppressed effectively. The output voltage of the LDO approaches a constant value. The invention can enhance the output stability of the LDO, and it is suitable for application in a variety of integrated circuit designs.

The above voltages, currents, and other parameters are just exemplary, rather than limitations of the invention. One of ordinary skill may adjust these settings according to different requirements. It should be understood that the proposed dynamic current sink and LDO are not limited to the configurations of FIGS. 1A-5C. The invention may merely include any one or more features of any one or more embodiments of FIGS. 1A-5C. In other words, not all of the features shown in the figures should be implemented in the proposed dynamic current sink and LDO of the invention.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

While the invention has been described by way of example and in terms of the preferred embodiments, it is to be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A dynamic current sink (100) suitable for stabilizing an output voltage at an output node (NOUT) of an LDO (Low Dropout Linear Regulator) (180), when the dynamic current sink (100) is coupled to said LDO (180), the dynamic current sink (100) comprising:
a first voltage comparator (111), suitable for comparing a first reference voltage (VREF1) with a second control signal (SC2) from the LDO (180) when the dynamic current sink (100) is coupled to said LDO (180), so as to generate a first control signal (SC1);
a first transistor (M1), wherein the first transistor (M1) has a control terminal for receiving the first control signal (SC1), a first terminal coupled to a ground voltage (VSS), and a second terminal coupled to a first node (N1);
a first current source (121), supplying a first current to the first node (N1);
a first inverter (131), wherein the first inverter (131) has an input terminal coupled to the first node (N1), and an output terminal coupled to a second node (N2);
a second current source (122), supplying a second current to a third node (N3);
an NAND gate (141), wherein the NAND gate (141) has a first input terminal coupled to the third node (N3), a second input terminal coupled to the second node (N2), and an output terminal coupled to a fourth node (N4);
a first capacitor (C1), coupled between the fourth node (N4) and a fifth node (N5);
a first resistor (R1), coupled between the fifth node (N5) and the ground voltage (VSS);
a second transistor (M2), wherein the second transistor (M2) has a control terminal coupled to the fifth node (N5), a first terminal coupled to the ground voltage (VSS), and a second terminal coupled to the third node (N3); and
a third transistor (M3), wherein the third transistor (M3) has a control terminal coupled to the fifth node (N5), a first terminal coupled to the ground voltage (VSS), and a second terminal suitable for being coupled to the output node (NOUT) when the dynamic current sink (100) is coupled to said LDO (180);
wherein the third transistor (M3) is configured to selectively draw a first discharge current (ID1) from the output node (NOUT).

2. The dynamic current sink (100) as claimed in claim 1, further comprising:
a second resistor (R2), suitable for being coupled between the output node (NOUT) and the second terminal of the third transistor (M3) when the dynamic current sink (100) is coupled to said LDO (180).

3. The dynamic current sink (300) as claimed in one of the preceding claims, further comprising:
a second inverter (132), wherein the second inverter (132) has an input terminal coupled to the fourth node (N4), and an output terminal coupled to a seventh node (N7);
a third current source (123), supplying a third current to an eighth node (N8);
a fifth transistor (M5), wherein the fifth transistor (M5) has a control terminal coupled to the fourth node (N4), a first terminal coupled to a ninth node (N9), and a second terminal coupled to the eighth node (N8);
a second capacitor (C2), coupled between the ninth node (N9) and the ground voltage (VSS);
a sixth transistor (M6), wherein the sixth transistor (M6) has a control terminal coupled to the seventh node (N7), a first terminal coupled to a tenth node (N10), and a second terminal coupled to the ninth node (N9);
a fifth resistor, coupled between the tenth node (N10) and the ground voltage (VSS); and
a seventh transistor (M7), wherein the seventh transistor (M7) has a control terminal coupled to the ninth node (N9), a first terminal coupled to the ground voltage (VSS), and a second terminal suitable for being coupled to the output node (NOUT) when the dynamic current sink (100) is coupled to said LDO (180);
wherein the seventh transistor (M7) is configured to selectively draw a second discharge current (ID2) from the output node (NOUT).

4. The dynamic current sink (300) as claimed in claim 3, further comprising:
a sixth resistor (R6), suitable for being coupled between the output node (NOUT) and the second terminal of the seventh transistor (M7) when the dynamic current sink (100) is coupled to said LDO (180).

5. The dynamic current sink (300) as claimed in claim 3, wherein the first discharge current (IDi) and the second discharge current (ID2) have different slopes over time axis.

6. A system comprising a Low Dropout Linear Regulator (180), LDO, and a dynamic current sink (100) according to any of the preceding claims, wherein the dynamic current sink (100) is coupled to the LDO (180) and configured for stabilizing an output voltage at an output node (NOUT) of the LDO (180), wherein:
the first voltage comparator (111) is configured for comparing a first reference voltage (VREF1) with a second control signal (SC2) from the LDO (180), so as to generate a first control signal (SCi); and the third transistor (M3) has a control terminal coupled to the fifth node (N5), a first terminal coupled to the ground voltage (VSS), and a second terminal coupled to the output node (NOUT);
wherein the third transistor (M3) is configured to selectively draw a first discharge current (ID1) from the output node (NOUT).

7. The system as claimed in claim 6, wherein the LDO (180) further comprises:
a second voltage comparator (112), configured for comparing a second reference voltage (VREF2) with a feedback voltage (VFB), so as to generate the second control signal (SC2);
a fourth transistor (M4), wherein the fourth transistor (M4) has a control terminal for receiving the second control signal (SC2), a first terminal coupled to a supply voltage, and a second terminal coupled to the output node (NOUT);
a third resistor (R3), coupled between the output node (NOUT) and a sixth node (N6), wherein the sixth node (N6) has the feedback voltage (VFB); and
a fourth resistor (R4), coupled between the sixth node (N6) and the ground voltage (VSS).

8. The system as claimed in claim 7, wherein the fourth transistor (M4) is configured to selectively supply a loading current (IL) to the output node (NOUT).

9. The system as claimed in claim 7 or 8, wherein the output node (NOUT) is further coupled to a stabilizing capacitor (CS) and is arranged for driving an external loading element (190).

10. The system as claimed in claim 8 or 9, wherein if the loading current (IL) is changed, an overshoot output voltage or an undershoot output voltage occurs at the output node (NOUT), and the first discharge current (ID1) is arranged for stabilizing the output voltage at the output node (NOUT).

11. The system as claimed in one of claims 7 to 10, wherein the first voltage comparator (111) has a positive input terminal for receiving the first reference voltage (VREF1), a negative input terminal for receiving the second control signal (SC2), and an output terminal for outputting the first control signal (SC1), wherein the second voltage comparator (112) has a positive input terminal for receiving the feedback voltage (VFB), a negative input terminal for receiving the second reference voltage (VREF2), and an output terminal for outputting the second control signal (SC2), and wherein the fourth transistor (M4) is a PMOS transistor (P-type Metal Oxide Semiconductor Field Effect Transistor).

## Patentansprüche

1. Dynamische Stromsenke (100), die zum Stabilisieren einer Ausgangsspannung an einem Ausgangsknoten (NOUT) eines LDO (Low Dropout Linear Regulator, Linearregler mit niedrigem Dropout) (180) geeignet ist, wenn die dynamische Stromsenke (100) mit dem LDO (180) gekoppelt ist, wobei die dynamische Stromsenke (100) folgendes umfasst:
einen ersten Spannungsvergleicher (111), der zum Vergleichen einer ersten Referenzspannung (VREF1) mit einem zweiten Steuersignal (SC2) von dem LDO (180) geeignet ist, wenn die dynamische Stromabsenkung (100) mit dem LDO (180) gekoppelt ist, um ein erstes Steuersignal (SC1) zu erzeugen;
einen ersten Transistor (M1), wobei der erste Transistor (M1) einen Steueranschluss zum Empfangen des ersten Steuersignals (SC1), einen ersten Anschluss, der mit einer Massespannung (VSS) gekoppelt ist, und einen zweiten Anschluss, der mit einem ersten Knoten (N1) gekoppelt ist, aufweist;
eine erste Stromquelle (121), die einen ersten Strom an den ersten Knoten (N1) liefert;
einen ersten Wechselrichter (131), wobei der erste Wechselrichter (131) einen Eingangsanschluss aufweist, der mit dem ersten Knoten (N1) gekoppelt ist, und einen Ausgangsanschluss, der mit einem zweiten Knoten (N2) gekoppelt ist;
eine zweite Stromquelle (122), die einen zweiten Strom an einen dritten Knoten (N3) liefert;
ein NAND-Gate (141), wobei das NAND-Gate (141) einen ersten Eingangsanschluss aufweist, der mit dem dritten Knoten (N3) gekoppelt ist, einen zweiten Eingangsanschluss, der mit dem zweiten Knoten (N2) gekoppelt ist, und einen Ausgangsanschluss, der mit einem vierten Knoten (N4) gekoppelt ist;
einen ersten Kondensator (C1), der zwischen dem vierten Knoten (N4) und einem fünften Knoten (N5) gekoppelt ist;
einen ersten Widerstand (R1), der zwischen dem fünften Knoten (N5) und der Massespannung (VSS) gekoppelt ist;
einen zweiten Transistor (M2), wobei der zweite Transistor (M2) einen mit dem fünften Knoten (N5) gekoppelten Steueranschluss, einen mit der Massespannung (VSS) gekoppelten ersten Anschluss und einen mit dem dritten Knoten (N3) gekoppelten zweiten Anschluss aufweist; und
einen dritten Transistor (M3), wobei der dritte Transistor (M3) einen Steueranschluss aufweist, der mit dem fünften Knoten (N5) gekoppelt ist, einen ersten Anschluss, der mit der Massespannung (VSS) gekoppelt ist, und einen zweiten Anschluss, der geeignet ist, mit dem Ausgangsknoten (NOUT) gekoppelt zu werden, wenn die dynamische Stromquelle (100) mit dem LDO (180) gekoppelt ist;
wobei der dritte Transistor (M3) zum selektiven Abziehen eines ersten Entladestroms (ID1) aus dem Ausgangsknoten (NOUT) konfiguriert ist.

2. Dynamische Stromsenke (100) nach Anspruch 1, ferner umfassend:
einen zweiten Widerstand (R2), der geeignet ist, zwischen dem Ausgangsknoten (NOUT) und dem zweiten Anschluss des dritten Transistors (M3) gekoppelt zu werden, wenn die dynamische Stromabsenkung (100) mit dem LDO (180) gekoppelt ist.

3. Dynamische Stromsenke (300), gemäß einem der vorhergehenden Ansprüche, die ferner folgendes umfasst:
einen zweiten Wechselrichter (132), wobei der zweite Wechselrichter (132) einen Eingangsanschluss aufweist, der mit dem vierten Knoten (N4) gekoppelt ist, und einen Ausgangsanschluss, der mit einem siebten Knoten (N7) gekoppelt ist;
eine dritte Stromquelle (123), die einen dritten Strom an einen achten Knoten (N8) liefert;
einen fünften Transistor (M5), wobei der fünfte Transistor (M5) einen mit dem vierten Knoten (N4) gekoppelten Steueranschluss, einen mit einem neunten Knoten (N9) gekoppelten ersten Anschluss und einen mit dem achten Knoten (N8) gekoppelten zweiten Anschluss aufweist;
einen zweiten Kondensator (C2), der zwischen dem neunten Knoten (N9) und der Massespannung (VSS) gekoppelt ist;
einen sechsten Transistor (M6), wobei der sechste Transistor (M6) einen mit dem siebten Knoten (N7) gekoppelten Steueranschluss, einen mit einem zehnten Knoten (N10) gekoppelten ersten Anschluss und einen mit dem neunten Knoten (N9) gekoppelten zweiten Anschluss aufweist;
einen fünften Widerstand, der zwischen dem zehnten Knoten (N10) und der Massespannung (VSS) gekoppelt ist; und
einen siebten Transistor (M7), wobei der siebte Transistor (M7) einen Steueranschluss aufweist, der mit dem neunten Knoten (N9) gekoppelt ist, einen ersten Anschluss, der mit der Massespannung (VSS) gekoppelt ist, und einen zweiten Anschluss, der geeignet ist, mit dem Ausgangsknoten (NOUT) gekoppelt zu werden, wenn die dynamische Stromquelle (100) mit dem LDO (180) gekoppelt ist;
wobei der siebte Transistor (M7) konfiguriert ist, um selektiv einen zweiten Entladestrom (ID2) aus dem Ausgangsknoten (NOUT) abzuziehen.

4. Dynamische Stromsenke (300) nach Anspruch 3, ferner umfassend:
einen sechsten Widerstand (R6), der geeignet ist, zwischen dem Ausgangsknoten (NOUT) und dem zweiten Anschluss des siebten Transistors (M7) gekoppelt zu werden, wenn die dynamische Stromabsenkung (100) mit dem LDO (180) gekoppelt ist.

5. Dynamische Stromsenke (300) nach Anspruch 3, wobei der erste Entladestrom (ID1) und der zweite Entladestrom (ID2) unterschiedliche Steigungen über die Zeitachse aufweisen.

6. System, umfassend einen Linearregler (180) mit niedrigem Dropout, LDO, und eine dynamische Stromsenke (100) gemäß einem der vorhergehenden Ansprüche, wobei die dynamische Stromsenke (100) mit dem LDO (180) gekoppelt und zum Stabilisieren einer Ausgangsspannung an einem Ausgangsknoten (NOUT) des LDO (180) konfiguriert ist, wobei:
der erste Spannungsvergleicher (111) zum Vergleichen einer ersten Referenzspannung (VREF1) mit einem zweiten Steuersignal (SC2) aus dem LDO (180) konfiguriert ist, um ein erstes Steuersignal (SC1) zu erzeugen; und der dritte Transistor (M₃) einen mit dem fünften Knoten (N5) gekoppelten Steueranschluss, einen mit der Massespannung (VSS) gekoppelten ersten Anschluss und einen mit dem Ausgangsknoten (NOUT) gekoppelten zweiten Anschluss aufweist;
wobei der dritte Transistor (M3) zum selektiven Abziehen eines ersten Entladestroms (ID1) aus dem Ausgangsknoten (NOUT) konfiguriert ist.

7. System nach Anspruch 6, worin der LDO (180) ferner folgendes umfasst:
einen zweiten Spannungsvergleicher (112), der zum Vergleichen einer zweiten Referenzspannung (VREF2) mit einer Rückführspannung (VFB) konfiguriert ist, um das zweite Steuersignal (SC2) zu erzeugen;
einen vierten Transistor (M4), wobei der vierte Transistor (M4) einen Steueranschluss zum Empfangen des zweiten Steuersignals (SC2), einen ersten Anschluss, der mit einer Versorgungsspannung gekoppelt ist, und einen zweiten Anschluss, der mit dem Ausgangsknoten (NOUT) gekoppelt ist, aufweist;
einen dritten Widerstand (R3), der zwischen dem Ausgangsknoten (NOUT) und einem sechsten Knoten (N6) gekoppelt ist, wobei der sechste Knoten (N6) die Rücckopplungsspannung (VFB) aufweist; und
einen vierten Widerstand (R4), der zwischen dem sechsten Knoten (N6) und der Erdungsspannung (VSS) gekoppelt ist.

8. System nach Anspruch 7, wobei der vierte Transistor (M4) zum selektiven Zuführen eines Laststroms (IL) zu dem Ausgangsknoten (NOUT) konfiguriert ist.

9. System nach Anspruch 7 oder 8, wobei der Ausgangsknoten (NOUT) weiterhin mit einem Stabilisierungskondensator (CS) gekoppelt ist und zum Antreiben eines externen Ladeelements (190) ausgelegt ist.

10. System nach Anspruch 8 oder 9, wobei bei Änderung des Laststroms (IL) eine Überschwingerausgangsspannung oder eine Unterschwingerausgangsspannung am Ausgangsknoten (NOUT) auftritt und der erste Entladestrom (ID1) zum Stabilisieren der Ausgangsspannung am Ausgangsknoten (NOUT) ausgelegt ist.

11. System nach einem der Ansprüche 7 bis 10, wobei der erste Spannungsvergleicher (111) einen positiven Eingangsanschluss zum Empfangen der ersten Referenzspannung (VREF1), einen negativen Eingangsanschluss zum Empfangen des zweiten Steuersignals (SC2) und einen Ausgangsanschluss zur Ausgabe des ersten Steuersignals (SC1) aufweist, wobei der zweite Spannungsvergleicher (112) einen positiven Eingangsanschluss zum Empfangen der Rückkopplungsspannung (VFB), einen negativen Eingangsanschluss zum Empfangen der zweiten Referenzspannung (VREF2) und einen Ausgangsanschluss zum Ausgeben des zweiten Steuersignals (SC2) aufweist, und wobei der vierte Transistor (M4) ein PMOS-Transistor (P-Typ Metalloxid-Halbleiter-Feldeffekttransistor) ist.

## Revendications

1. Puits de courant dynamique (100) pertinent pour stabiliser une tension de sortie au niveau d'un nœud de sortie (NOUT) d'un régulateur linéaire à faible chute de tension (LDO) (180), lorsque le puits de courant dynamique (100) est couplé audit régulateur LDO (180), le puits de courant dynamique (100) comprenant :
un premier comparateur de tension (111), pertinent pour comparer une première tension de référence (VREF1) à un second signal de commande (SC2) provenant du régulateur LDO (180), lorsque le puits de courant dynamique (100) est couplé audit régulateur LDO (180), de manière à générer un premier signal de commande (SC1) ;
un premier transistor (M1), dans lequel le premier transistor (M1) présente une borne de commande pour recevoir le premier signal de commande (SC1), une première borne couplée à une tension de masse (VSS) et une seconde borne couplée à un premier nœud (N1);
une première source de courant (121), fournissant un premier courant au premier nœud (N1) ;
un premier onduleur (131), dans lequel le premier onduleur (131) présente une borne d'entrée couplée au premier nœud (N1), et une borne de sortie couplée à un deuxième nœud (N2) ;
une deuxième source de courant (122), fournissant un deuxième courant à un troisième nœud (N3) ;
une porte NON-ET (141), dans lequel la porte NON-ET (141) présente une première borne d'entrée couplée au troisième nœud (N3), une seconde borne d'entrée couplée au deuxième nœud (N2), et une borne de sortie couplée à un quatrième nœud (N4) ;
un premier condensateur (C1), couplé entre le quatrième nœud (N4) et un cinquième nœud (N5) ;
une première résistance (R1), couplée entre le cinquième nœud (N5) et la tension de masse (VSS) ;
un deuxième transistor (M2), dans lequel le deuxième transistor (M2) présente une borne de commande couplée au cinquième nœud (N5), une première borne couplée à la tension de masse (VSS) et une seconde borne couplée au troisième nœud (N3) ; et
un troisième transistor (M3), dans lequel le troisième transistor (M3) présente une borne de commande couplée au cinquième nœud (N5), une première borne couplée à la tension de masse (VSS), et une seconde borne pertinente pour être couplée au nœud de sortie (NOUT) lorsque le puits de courant dynamique (100) est couplé audit régulateur LDO (180) ;
dans lequel le troisième transistor (M3) est configuré de manière à puiser sélectivement un premier courant de décharge (ID1) à partir du nœud de sortie (NOUT).

2. Puits de courant dynamique (100) selon la revendication 1, comprenant en outre :
une deuxième résistance (R2), pertinente pour être couplée entre le nœud de sortie (NOUT) et la seconde borne du troisième transistor (M3) lorsque le puits de courant dynamique (100) est couplé audit régulateur LDO (180).

3. Puits de courant dynamique (300) selon l'une quelconque des revendications précédentes, comprenant en outre :
un second onduleur (132), dans lequel le second onduleur (132) présente une borne d'entrée couplée au quatrième nœud (N4), et une borne de sortie couplée à un septième nœud (N7) ;
une troisième source de courant (123), fournissant un troisième courant à un huitième nœud (N8) ;
un cinquième transistor (M5), dans lequel le cinquième transistor (M5) présente une borne de commande couplée au quatrième nœud (N4), une première borne couplée à un neuvième nœud (N9), et une seconde borne couplée au huitième nœud (N8) ;
un second condensateur (C2), couplé entre le neuvième nœud (N9) et la tension de masse (VSS) ;
un sixième transistor (M6), dans lequel le sixième transistor (M6) présente une borne de commande couplée au septième nœud (N7), une première borne couplée à un dixième nœud (N10), et une seconde borne couplée au neuvième nœud (N9) ;
une cinquième résistance, couplée entre le dixième nœud (N10) et la tension de masse (VSS) ; et
un septième transistor (M7), dans lequel le septième transistor (M7) présente une borne de commande couplée au neuvième nœud (N9), une première borne couplée à la tension de masse (VSS), et une seconde borne pertinente pour être couplée au nœud de sortie (NOUT) lorsque le puits de courant dynamique (100) est couplé audit régulateur LDO (180) ;
dans laquelle le septième transistor (M7) est configuré de manière à puiser sélectivement un deuxième courant de décharge (ID2) à partir du nœud de sortie (NOUT).

4. Puits de courant dynamique (300) selon la revendication 3, comprenant en outre :
une sixième résistance (R6), pertinente pour être couplée entre le nœud de sortie (NOUT) et la seconde borne du septième transistor (M7) lorsque le puits de courant dynamique (100) est couplé audit régulateur LDO (180).

5. Puits de courant dynamique (300) selon la revendication 3, dans lequel le premier courant de décharge (ID1) et le deuxième courant de décharge (ID2) ont des pentes différentes sur l'axe du temps.

6. Système comprenant un régulateur linéaire à faible chute de tension, LDO, (180), et un puits de courant dynamique (100) selon l'une quelconque des revendications précédentes, dans lequel le puits de courant dynamique (100) est couplé au régulateur LDO (180) et configuré de manière à stabiliser une tension de sortie au niveau d'un nœud de sortie (NOUT) du régulateur LDO (180), dans lequel :
le premier comparateur de tension (111) est configuré de manière à comparer une première tension de référence (VREF1) à un second signal de commande (SC2) en provenance du régulateur LDO (180), de manière à générer un premier signal de commande (SC1) ; et le troisième transistor (M3) présente une borne de commande couplée au cinquième nœud (N5), une première borne couplée à la tension de masse (VSS), et une seconde borne couplée au nœud de sortie (NOUT) ;
dans lequel le troisième transistor (M3) est configuré de manière à puiser sélectivement un premier courant de décharge (ID1) à partir du nœud de sortie (NOUT).

7. Système selon la revendication 6, dans lequel le régulateur LDO (180) comprend en outre :
un second comparateur de tension (112), configuré de manière à comparer une seconde tension de référence (VREF2) à une tension de rétroaction (VFB), de manière à générer le second signal de commande (SC2) ;
un quatrième transistor (M4), dans lequel le quatrième transistor (M4) présente une borne de commande pour recevoir le second signal de commande (SC2), une première borne couplée à une tension d'alimentation, et une seconde borne couplée au nœud de sortie (NOUT) ;
une troisième résistance (R3), couplée entre le nœud de sortie (NOUT) et un sixième nœud (N6), dans lequel le sixième nœud (N6) présente la tension de rétroaction (VFB) ; et
une quatrième résistance (R4), couplée entre le sixième nœud (N6) et la tension de masse (VSS).

8. Système selon la revendication 7, dans lequel le quatrième transistor (M4) est configuré de manière à fournir sélectivement un courant de charge (IL) au nœud de sortie (NOUT).

9. Système selon la revendication 7 ou 8, dans lequel le nœud de sortie (NOUT) est en outre couplé à un condensateur de stabilisation (CS) et est agencé de manière à commander un élément de charge externe (190).

10. Système selon la revendication 8 ou 9, dans lequel, si le courant de charge (IL) est modifié, une tension de sortie de surdépassement ou une tension de sortie de sous-dépassement se produit au niveau du nœud de sortie (NOUT), et le premier courant de décharge (ID1) est agencé de manière à stabiliser la tension de sortie au niveau du nœud de sortie (NOUT).

11. Système selon l'une quelconque des revendications 7 à 10, dans lequel le premier comparateur de tension (111) présente une borne d'entrée positive destinée à recevoir la première tension de référence (VREF1), une borne d'entrée négative destinée à recevoir le second signal de commande (SC2) et une borne de sortie destinée à fournir en sortie le premier signal de commande (SC1), dans lequel le second comparateur de tension (112) présente une borne d'entrée positive destinée à recevoir la tension de rétroaction (VFB), une borne d'entrée négative destinée à recevoir la seconde tension de référence (VREF2), et une borne de sortie destinée à fournir en sortie le second signal de commande (SC2), et dans lequel le quatrième transistor (M4) est un transistor à effet de champ à semi-conducteur à oxyde métallique de type P (PMOS).
